# FASCICULE DE BREVET EUROPEEN

(11) **EP 2 697 884 B1**
(45) Date de publication et mention de la délivrance du brevet: **01.11.2017**
(21) Numéro de dépôt: 12722774.2
(22) Date de dépôt: 11.04.2012
(51) Int. Cl.: H02J 7/00

(54) **DISPOSITIF ET PROCÉDÉ D'ÉQUILIBRAGE DE CELLULES D'UNE BATTERIE**
VORRICHTUNG UND VERFAHREN ZUM AUSGLEICHEN VON BATTERIEZELLEN
DEVICE AND METHOD FOR BALANCING BATTERY CELLS

(30) Priorité: 11.04.2011 FR 1153132
(43) Date de publication de la demande: 19.02.2014
(73) Titulaire: Renault S.A.S., 92100 Boulogne-Billancourt (FR)
(72) Inventeur: AMEZIANI, Menouar, 78280 Guyancourt (FR); HOUIVET, Jeanne, 75015 Paris (FR)
(86) Numéro de dépôt international: PCT/FR2012/050786
(87) Numéro de publication internationale: WO 2012/140363

(56) Documents cités:
- WO-A1-2008/097033
- US-A1- 2008 272 735
- RAY RIDLEY: "THE NINE MOST USEFUL POWER TOPOLOGIES", INTERNET CITATION, 1 octobre 2007 (2007-10-01), pages 15-18, XP002486528, Extrait de l'Internet: URL:http://www.powersystemsdesign.com/desi gn_tips_oct07.pdf

## Description

L'invention concerne les véhicules automobiles à traction électrique ou hybride et plus précisément les batteries de ces véhicules.

Les batteries des véhicules automobiles à traction électrique ou hybride comprennent généralement une pluralité de cellules disposées en série. Lorsqu'une batterie alimente un moteur électrique, ou lorsque cette batterie est rechargée, la tension aux bornes de chaque cellule est modifiée. La modification de la tension aux bornes de chaque cellule peut varier, faisant apparaître des déséquilibrages de tension entre les cellules. Ces déséquilibrages de tension correspondent à des déséquilibrages de niveau de charge entre les cellules (« State Of Charge : SOC » en langue anglaise). Certaines cellules peuvent ainsi être chargées ou complètement déchargées avant les autres cellules, et risquent d'être détériorées. La charge de la batterie est arrêtée dès qu'au moins une cellule est complètement chargée, la batterie est déchargée dès qu'au moins une cellule est complètement déchargée, les déséquilibres limitent donc l'utilisation de la batterie.

Il est donc nécessaire d'équilibrer la tension aux bornes de chaque cellule de la batterie ou le niveau de charge de chaque cellule de la batterie. A cet effet, il a été proposé de décharger les cellules trop chargées dans des résistances. L'équilibrage obtenu par un tel procédé est obtenu après une durée trop longue par rapport au temps de recharge d'une batterie de véhicule électrique, et ce procédé a pour inconvénient d'engendrer des pertes énergétiques.

Il a également été proposé de mettre en oeuvre un équilibrage actif des cellules d'une batterie, en transférant l'énergie des cellules trop chargées vers les cellules les moins chargées.

On pourra se référer à la demande de brevet américain US 2008/0272735 qui décrit l'utilisation d'un circuit d'alimentation à découpage selon une topologie « flyback » utilisant un transformateur à plusieurs enroulements secondaires pour l'équilibrage des tensions aux bornes des cellules. Cette solution a pour inconvénient d'être coûteuse et d'émettre des interférences électromagnétiques, et les courants générés pour charger et décharger les cellules peuvent les détériorer.

On pourra également se référer à la demande WO 2004/049540 qui décrit l'utilisation d'un convertisseur continu-continu unique et d'une matrice de commutation à semi-conducteur pour la sélection de la cellule. Cette matrice de commutation a pour inconvénient d'être coûteuse.

Enfin, il a été proposé dans la demande de brevet américain US 2005/0017682 d'utiliser un convertisseur continu-continu par cellule. L'utilisation d'un convertisseur par cellule a pour inconvénient d'être coûteuse.

L'invention a pour but d'améliorer l'équilibrage de cellules d'une batterie, en équilibrant les tensions aux bornes de ces cellules, ou en équilibrant leurs niveaux de charge respectifs, et notamment d'en réduire le coût.

Selon un aspect, il est proposé un dispositif d'équilibrage de cellules d'une batterie d'un véhicule automobile à traction électrique, le dispositif comprenant un enroulement primaire disposé en série avec un interrupteur primaire et, pour chaque cellule, un circuit comprenant en série un enroulement secondaire formant un transformateur avec l'enroulement primaire, un interrupteur secondaire, une bobine, et une diode montée en parallèle avec la bobine et la cellule, et des moyens de commande de l'interrupteur primaire et de chaque interrupteur secondaire.

On obtient ainsi un dispositif utilisant un unique enroulement primaire pour une pluralité d'enroulements secondaires, capable d'équilibrer la tension aux bornes des cellules d'une batterie, ou les niveaux de charge de ces cellules. L'utilisation d'un seul transformateur, à plusieurs secondaires, permet également de réduire le coût du dispositif.

On notera que le dispositif permet d'équilibrer le niveau de charge des cellules d'une batterie d'un véhicule automobile à traction électrique.

Avantageusement, les moyens de commande sont aptes à élaborer des signaux à modulation de largeur d'impulsion (« Pulse Width Modulation : PWM » en langue anglaise) destinés à l'interrupteur primaire et aux interrupteurs secondaires.

Le dispositif peut comprendre un circuit de filtrage comprenant une capacité, une bobine et une diode, le circuit de filtrage étant destiné à être disposé en série entre la batterie et l'enroulement primaire.

Ce circuit de filtrage permet de filtrer les harmoniques liées aux signaux élaborés par les moyens de commande des interrupteurs, notamment les signaux à modulation de largeur d'impulsion.

Avantageusement, l'interrupteur primaire et les interrupteurs secondaires sont des transistors MOSFET.

En variante, les interrupteurs secondaires comprennent deux transistors MOSFET en position tête-bêche.

Ainsi, le dispositif n'utilise qu'un nombre réduit de transistors MOSFET, ce qui permet de réduire le coût du dispositif.

Selon un autre aspect, il est proposé un procédé d'équilibrage de cellules d'une batterie d'un véhicule automobile à traction électrique au moyen d'un dispositif comprenant un enroulement primaire disposé en série avec un interrupteur primaire et, pour chaque cellule, un circuit comprenant en série un enroulement secondaire formant un transformateur avec l'enroulement primaire, un interrupteur secondaire, une bobine, et une diode montée en parallèle avec la bobine et la cellule, ledit procédé comprenant une élaboration d'un signal à modulation de largeur d'impulsion destiné à l'interrupteur primaire ou à au moins un interrupteur secondaire.

Ce procédé permet en outre d'équilibrer les tensions aux bornes des cellules de la batterie, ou le niveau de charge des cellules de la batterie d'un véhicule automobile à traction électrique.

Avantageusement, on élabore un signal à modulation de largeur d'impulsion destiné à l'interrupteur primaire et l'on ferme l'interrupteur secondaire d'au moins une cellule à charger.

En variante, on élabore un signal à modulation de largeur d'impulsion destiné à l'interrupteur secondaire d'au moins une cellule à décharger.

D'autres avantages et caractéristiques de l'invention apparaîtront à l'étude de la description suivante, prise à titre d'exemple non limitatif et illustrée par les dessins annexés sur lesquels:
- la figure 1 illustre un mode de réalisation d'un dispositif selon l'invention,
- la figure 2 illustre un deuxième mode de réalisation d'un dispositif selon l'invention dans lequel les interrupteurs sont des transistors MOSFET, et
- la figure 3 illustre un troisième mode de réalisation d'un dispositif selon l'invention dans lequel les interrupteurs secondaires comprennent deux transistors MOSFET.

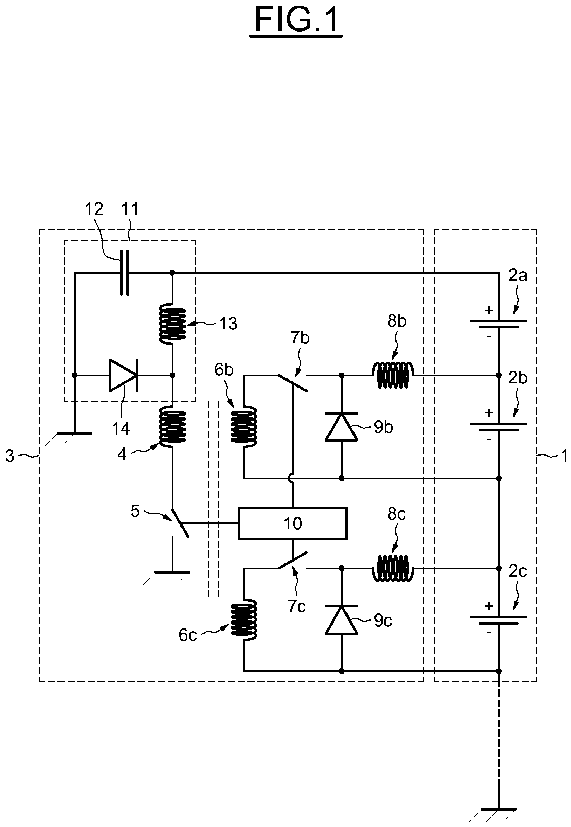

Sur la figure 1, on a représenté une batterie 1 d'un véhicule automobile à traction électrique ou hybride.

La batterie 1 comprend de manière classique une pluralité de cellules 2a, 2b, 2c connectées en série ici au nombre de trois. Bien entendu, la batterie 1 peut comprendre un nombre supérieur de cellules, qui n'ont pas été représentées ici pour des raisons de simplification.

Un dispositif d'équilibrage 3 de la tension aux bornes des cellules 2a, 2b, 2c est connecté aux bornes des cellules. Ce dispositif est également utilisable pour l'équilibrage des niveaux de charge des cellules, le niveau de charge d'une cellule dépendant notamment de la tension de cette cellule.

Le dispositif d'équilibrage 3 comprend un enroulement primaire 4 disposé en série avec un interrupteur primaire 5. Pour chaque cellule de la batterie 1, un enroulement secondaire forme un transformateur avec l'enroulement primaire 4. On a notamment représenté les enroulements secondaires 6b et 6c des cellules 2b et 2c, la cellule 2a ainsi que les autres cellules non représentées ici comportent également un tel enroulement secondaire, ainsi que le circuit décrit ci-après.

Les enroulements secondaires 6b et 6c sont disposés au sein d'un circuit comprenant également, en série avec les enroulements secondaires, des interrupteurs secondaires 7b et 7c, des bobines 8b et 8c et enfin les cellules 2b et 2c. Des diodes 9b et 9c sont respectivement montées en parallèle avec la bobine 8b et la cellule 2b, et avec la bobine 8c et la cellule 2c.

On obtient ainsi pour chaque cellule une topologie couramment appelée en langue anglaise par le vocable « forward », mais qui utilise un enroulement primaire commun à chaque cellule.

L'interrupteur primaire 5 ainsi que les interrupteurs secondaires sont commandés par des moyens de commande 10. Les moyens de commande 10 sont capables de générer des signaux à modulation de largeur d'impulsion, ou encore des signaux continus destinés à la fermeture d'un interrupteur.

En outre, un circuit de filtrage 11 comprenant en parallèle une capacité 12, une bobine 13 et une diode 14, est disposé en série entre la première cellule 2a de la batterie 1 et l'enroulement primaire 4. Ainsi, les harmoniques générées par exemple par les moyens de commande 10 lors de la génération de signaux à modulation de largeur d'impulsion pour contrôler les interrupteurs sont filtrées par le circuit de filtrage 11.

Le dispositif d'équilibrage 3 peut également comprendre des moyens de mesure de la tension aux bornes des cellules de la batterie 1. Ces moyens de mesure sont par exemple connectés aux moyens de commande 10 et permettent de déterminer si les cellules sont trop chargées ou déchargées.

A titre d'exemple, la charge de la cellule 2b comprend une élaboration, par les moyens de commande 10, d'un signal à modulation de largeur d'impulsion destiné à l'interrupteur primaire 5. Lors de cette étape, les moyens de commande 10 ferment l'interrupteur secondaire 7b. Quand le signal à modulation de largeur d'impulsion ferme l'interrupteur primaire 5, le courant passe à travers l'interrupteur secondaire 7b à l'enroulement secondaire 6b. La bobine 8b est ainsi chargée. Quand le signal à modulation de largeur d'impulsion ouvre l'interrupteur primaire 5, alors l'énergie stockée dans la bobine 8b est transférée à la cellule 2b, le courant circulant à travers la diode 9b. La diode 9b est une diode dite de roue-libre.

La charge de la cellule 2b est mise en oeuvre lorsque la tension aux bornes de la cellule 2b est trop faible, c'est-à-dire lorsque le niveau de charge de cette cellule est trop faible, et en particulier lorsque d'autres cellules sont trop chargées et peuvent alimenter cette cellule.

Par exemple, si la cellule 2c est trop chargée, alors la charge de la cellule 2b est accompagnée par la décharge de la cellule 2c. Lors de cette décharge, les moyens de commande 10 élaborent un signal à modulation de largeur d'impulsion à l'interrupteur secondaire 7c et ferment l'interrupteur primaire 5. Lorsque le signal à modulation de largeur d'impulsion ferme l'interrupteur secondaire 7c, l'énergie stockée dans la bobine 8c le signal est transférée au transformateur constitué de l'enroulement secondaire 6c et de l'enroulement primaire 4.

On obtient ainsi un équilibrage efficace, dont le rendement dépend des enroulements de chaque circuit, et de la modulation de largeur d'impulsion.

En outre, l'utilisation d'une topologie « forward » permet d'obtenir un équilibrage rapide de la tension aux bornes des cellules de la batterie 1.

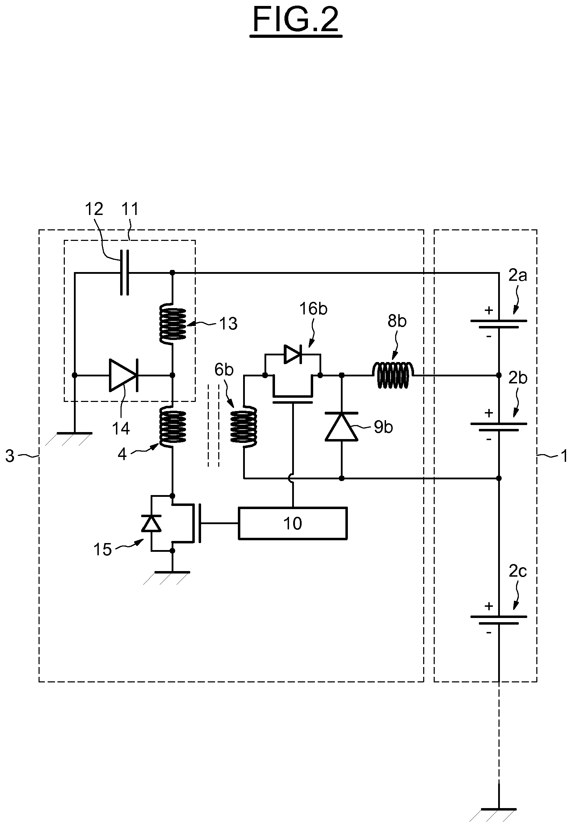

Sur la figure 2, on a représenté un deuxième mode de mise en oeuvre de l'invention, dans lequel l'interrupteur primaire 4 a été remplacé par un transistor MOSFET 15. Les interrupteurs secondaires, ont été remplacés par des transistors MOSFET, par exemple un transistor MOSFET 16b remplaçant l'interrupteur 7b.

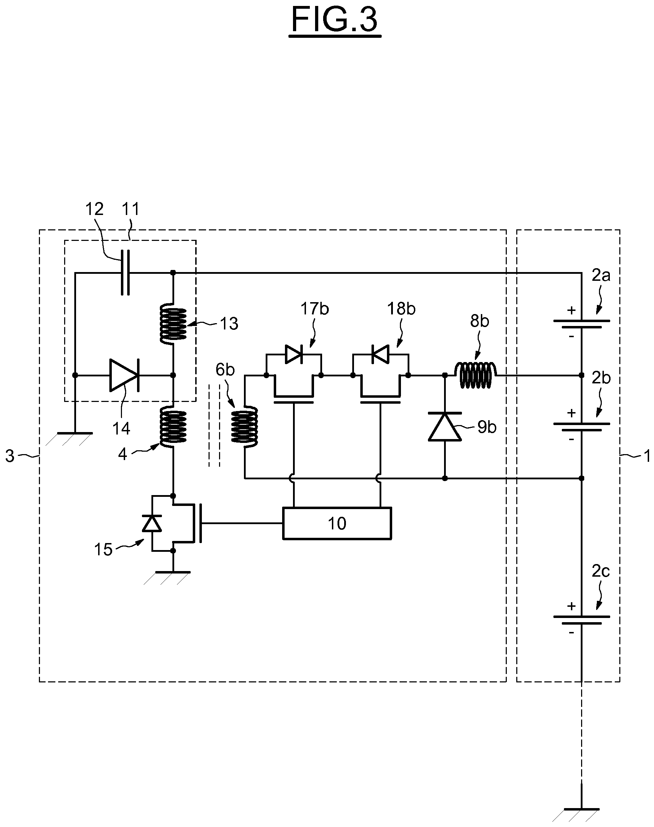

Sur la figure 3, on a représenté un troisième mode de mise en oeuvre de l'invention, dans lequel le transistor MOSFET 16b a été remplacé par deux transistors MOSFET 17b et 18b. Les deux transistors MOSFET 17b et 18b sont en position tête-bêche.

Dans ce mode de réalisation, la commande par un signal à modulation de largeur d'impulsion de l'un ou l'autre des transistors permet le passage du courant, dans un sens ou dans l'autre, c'est-à-dire, lors d'une charge ou d'une décharge de la cellule. Ce mode de réalisation permet également de sélectionner la cellule à charger indépendamment des niveaux de tension des autres cellules et améliore l'équilibrage de la tension aux bornes des batteries.

Grace à l'invention, on obtient un équilibrage actif de la tension aux bornes des cellules d'une batterie, rapide, et à un coût réduit.

On notera enfin que différents modes de démagnétisation (« reset » en langue anglaise) sont compatibles avec l'invention, notamment par résonnance, par enroulement additionnel ou par clamp actif.

## Revendications

1. Dispositif d'équilibrage (3) de cellules (2a, 2b, 2c) d'une batterie (1) d'un véhicule automobile à traction électrique, le dispositif comprenant un enroulement primaire (4) disposé en série avec un interrupteur primaire (5) et, pour chaque cellule, un circuit comprenant en série un enroulement secondaire (6b, 6c) formant un transformateur avec l'enroulement primaire, un interrupteur secondaire (7b, 7c), et des moyens de commande (10) de l'interrupteur primaire et de chaque interrupteur secondaire aptes à élaborer des signaux à modulation de largeur d'impulsion, destinés à l'interrupteur primaire ou à au moins un interrupteur secondaire le dispositif étant **caractérisé en ce qu'**il comporte une bobine (8b, 8c) et une diode (9b, 9c) montée en parallèle avec la bobine et destinée à être montée en parallèle avec la cellule, ainsi qu'un circuit de filtrage (11) comprenant une capacité (12), une bobine (13) et une diode (14), le circuit de filtrage étant destiné à être disposé en série entre la batterie (1) et l'enroulement primaire (4).

2. Dispositif selon la revendication 1, **caractérisé en ce que** les moyens de commandes (10) sont aptes à élaborer les signaux à modulation de largeur d'impulsion destinés à l'interrupteur primaire (5) et aux interrupteurs secondaires (7b, 7c).

3. Dispositif selon l'une quelconque des revendications précédentes, **caractérisé en ce que** l'interrupteur primaire (15) et les interrupteurs secondaires (16b) sont des transistors MOSFET.

4. Dispositif selon la revendication 3, **caractérisé en ce que** les interrupteurs secondaires comprennent deux transistors MOSFET (17b, 18b) en position tête-bêche.

5. Procédé d'équilibrage de cellules (2a, 2b, 2c) d'une batterie (1) d'un véhicule automobile à traction électrique au moyen d'un dispositif (3) comprenant un enroulement primaire (4) disposé en série avec un interrupteur primaire (5) et, pour chaque cellule, un circuit comprenant en série un enroulement secondaire (6b, 6c) formant un transformateur avec l'enroulement primaire, un interrupteur secondaire (7b, 7c), une bobine (8b, 8c), et une diode (9b, 9c) montée en parallèle avec la bobine et la cellule ainsi qu'un circuit de filtrage (11) comprenant une capacité (12), une bobine (13) et une diode (14), le circuit de filtrage étant destiné à être disposé en série entre la batterie (1) et l'enroulement primaire (4), ledit procédé comprenant une élaboration d'un signal à modulation de largeur d'impulsion destiné à l'interrupteur primaire ou à au moins un interrupteur secondaire.

6. Procédé selon la revendication 5, dans lequel on élabore un signal à modulation de largeur d'impulsion destiné à l'interrupteur primaire (5) et l'on ferme l'interrupteur secondaire (7b, 7c) d'au moins une cellule à charger.

7. Procédé selon la revendication 5 ou 6, dans lequel on élabore un signal à modulation de largeur d'impulsion destiné à l'interrupteur secondaire (7b, 7c) d'au moins une cellule à décharger et l'on ferme l'interrupteur primaire (5).

## Patentansprüche

1. Vorrichtung zum Ausgleichen (3) von Zellen (2a, 2b, 2c) einer Batterie (1) eines Kraftfahrzeugs mit Elektroantrieb, wobei die Vorrichtung umfasst: eine Primärwicklung (4), die mit einem primären Schalter (5) in Reihe angeordnet ist, und für jede Zelle eine Schaltung, die in Reihe eine Sekundärwicklung (6b, 6c), die mit der Primärwicklung einen Transformator bildet, einen sekundären Schalter (7b, 7c) und Mittel zur Steuerung (10) des primären Schalters und jedes sekundären Schalters, die geeignet sind, pulsweitenmodulierte Signale zu erzeugen, die für den primären Schalter oder für wenigstens einen sekundären Schalter bestimmt sind, umfasst, wobei die Vorrichtung **dadurch gekennzeichnet ist, dass** sie eine Spule (8b, 8c) und eine Diode (9b, 9c), die zu der Spule parallelgeschaltet ist und dazu bestimmt ist, zu der Zelle parallelgeschaltet zu werden, sowie eine Filterschaltung (11), die eine Kapazität (12), eine Spule (13)und eine Diode (14) umfasst, aufweist, wobei die Filterschaltung dazu bestimmt ist, zwischen der Batterie (1) und der Primärwicklung (4) in Reihe angeordnet zu werden.

2. Vorrichtung nach Anspruch 1, **dadurch gekennzeichnet, dass** die Steuerungsmittel (10) geeignet sind, die pulsweitenmodulierten Signale zu erzeugen, die für den primären Schalter (5) und die sekundären Schalter (7b, 7c) bestimmt sind.

3. Vorrichtung nach einem der vorhergehenden Ansprüche, **dadurch gekennzeichnet, dass** der primäre Schalter (15) und die sekundären Schalter (16b) MOSFET-Transistoren sind.

4. Vorrichtung nach Anspruch 3, **dadurch gekennzeichnet, dass** die sekundären Schalter zwei antiparallel geschaltete MOSFET-Transistoren (17b, 18b) umfassen.

5. Verfahren zum Ausgleichen von Zellen (2a, 2b, 2c) einer Batterie (1) eines Kraftfahrzeugs mit Elektroantrieb mittels einer Vorrichtung (3), welche umfasst: eine Primärwicklung (4), die mit einem primären Schalter (5) in Reihe angeordnet ist, und für jede Zelle eine Schaltung, die in Reihe eine Sekundärwicklung (6b, 6c), die mit der Primärwicklung einen Transformator bildet, einen sekundären Schalter (7b, 7c), eine Spule (8b, 8c) und eine Diode (9b, 9c), die zu der Spule und der Zelle parallelgeschaltet ist, umfasst, sowie eine Filterschaltung (11), die eine Kapazität (12), eine Spule (13)und eine Diode (14) umfasst, wobei die Filterschaltung dazu bestimmt ist, zwischen der Batterie (1) und der Primärwicklung (4) in Reihe angeordnet zu werden, wobei das Verfahren eine Erzeugung eines pulsweitenmodulierten Signals umfasst, das für den primären Schalter oder für wenigstens einen sekundären Schalter bestimmt ist.

6. Verfahren nach Anspruch 5, wobei ein pulsweitenmoduliertes Signal erzeugt wird, das für den primären Schalter (5) bestimmt ist, und der sekundäre Schalter (7b, 7c) wenigstens einer zu ladenden Zelle geschlossen wird.

7. Verfahren nach Anspruch 5 oder 6, wobei ein pulsweitenmoduliertes Signal erzeugt wird, das für den sekundären Schalter (7b, 7c) wenigstens einer zu entladenden Zelle bestimmt ist, und der primäre Schalter (5) geschlossen wird.

## Claims

1. Device (3) for balancing cells (2a, 2b, 2c) of a battery (1) of an electric traction automobile vehicle, the device comprising a primary winding (4) disposed in series with a primary switch (5) and for each cell a circuit comprising in series a secondary winding (6b, 6c) forming a transformer with the primary winding, a secondary switch (7b, 7c), and control means (10) of the primary switch and each secondary switch adapted to generate pulse width modulation signals intended for the primary switch (5) or for at least one secondary switch, the device being **characterized in that** it comprises a coil (8b, 8c) and a diode (9b, 9c) mounted in parallel with the coil and intended to be mounted in parallel with the cell, and also a filter circuit (11) comprising a capacitor (12), a coil (13) and a diode (14), the filter circuit being intended to be disposed in series between the battery (1) and the primary winding (4).

2. Device according to Claim 1, **characterized in that** the control means (10) are adapted to generate the pulse width modulation signals intended for the primary switch (5) or for the secondary switches (7b, 7c).

3. Device according to either one of the preceding claims, **characterized in that** the primary switch (15) and the secondary switches (16b) are MOSFETs.

4. Device according to Claim 3, **characterized in that** the secondary switches comprise two MOSFETs (17b, 18b) in anti-parallel.

5. A method of balancing cells (2a, 2b, 2c) of a battery (1) of an electric traction automobile vehicle by means of a device (3) comprising a primary winding (4) disposed in series with a primary switch (5) and, for each cell, a circuit comprising in series a secondary winding (6b, 6c) forming a transformer with the primary winding, a secondary switch (7b, 7c), a coil (8b, 8c) and a diode (9b, 9c) mounted in parallel with the coil and the cell, and also a filter circuit (11) comprising a capacitor (12), a coil (13) and a diode (14), the filter circuit being intended to be disposed in series between the battery (1) and the primary winding (4), said method comprising generation of a pulse width modulation signal intended for the primary switch or for at least one secondary switch.

6. Method according to Claim 5, wherein a pulse width modulation signal is generated intended for the primary switch (5) and the secondary switch (7b, 7c) of at least one cell to be charged is closed.

7. Method according to Claim 5 or 6, wherein a pulse width modulation signal is generated intended for the secondary switch (7b, 7c) of at least one cell to be discharged and the primary switch (5) is closed.
